# EUROPÄISCHE PATENTANMELDUNG

(11) **EP 1 014 754 A2**
(43) Veröffentlichungstag der Anmeldung: **28.06.2000**
(21) Anmeldenummer: 99440363.2
(22) Anmeldetag: 20.12.1999
(51) Int. Cl.: H04Q 11/04, H04Q 11/00

(54) **Schaltmatrix für Telekommunikationsanwendungen**

(30) Priorität: 23.12.1998 DE 19859832
(71) Anmelder: ALCATEL, 75008 Paris (FR)
(72) Erfinder: Weis, Bernd X., Dr., 70825 Korntal-Münchingen (DE)
(74) Vertreter: Rausch, Gabriele, Dr.

(57) **Zusammenfassung**

Die Erfindung betrifft eine Schaltmatrix (1) für Anwendungen in der Telekommunikation, mit mehreren nebeneinander angeordneten Schalteinheiten (2), mit Verbindungsleitungen (6), durch die benachbarte Schalteinheiten (2) miteinander verbunden sind, mit mehreren Eingangskanälen (3) und mit ebenso vielen Ausgangskanälen (4), wobei jeder Eingangskanal (3) durch Auswahl eines Pfades durch die Schaltmatrix (1) über ausgewählte Verbindungsleitungen (6) und ausgewählte Schalteinheiten (2) mit jedem Ausgangskanal (4) verbindbar ist. Um bei einer solchen Schaltmatrix (1) einerseits den Pfad (5) von einem Eingangskanal (3) zu einem beliebigen Ausgangskanal (4) schnell und einfach auswählen zu können und eine volle Broadcast- und Protection-Fähigkeit der Schaltumatrix (1) zu ermöglichen und andererseits eine Schaltmatrix (1) mit möglichst wenigen Schalteinheiten (2) realisieren zu können, schlägt die Erfindung vor, dass die Schalteinheiten (2) in einer Dreiecksmatrix-Struktur angeordnet sind.

## Beschreibung

Die vorliegende Erfindung betrifft eine Schaltmatrix für Anwendungen in der Telekommunikation, mit mehreren nebeneinander angeordneten Schalteinheiten, mit Verbindungsleitungen, durch die benachbarte Schalteinheiten miteinander verbunden sind, mit mehreren Eingangskanälen und mit ebenso vielen Ausgangskanälen, wobei jeder Eingangskanal durch Auswahl eines Pfades durch die Schaltmatrix über ausgewählte Verbindungsleitungen und ausgewählte Schalteinheiten mit jedem Ausgangskanal verbindbar ist.

Derartige Schaltmatrizen für Telekommunikationsanwendungen werden nach dem Stand der Technik bspw. in Telekommunikationsnetzen eingesetzt, in denen die zu übertragenden Daten in Übertragungsrahmen unterteilt sind. Die Rahmenstruktur der Daten entspricht bspw. dem sog. Synchrone-Digitale-Hierarchie (SDH)-Standard. Die Übertragungsrahmen nach dem SDH-Standard sind in einen Headerteil und einen Nutzdatenteil unterteilt. Der Headerteil enthält u. a. ein Rahmenwort, durch das der Anfang des Übertragungsrahmens gekennzeichnet ist. In dem Nutzdatenteil sind die zu übertragenden Daten enthalten. Die Übertragungsrahmen weisen 270 Spalten und 9 Zeilen auf. Die ersten 9 Spalten bilden über alle 9 Zeilen den Headerteil. Die restlichen 261 Zeilen bildenden Nutzdatenteil. Die SDH-Telekommunikationsnetze arbeiten vorzugsweise nach einer sog. Digital-Cross-Connect (DXC)-Technik. Die DXC-Technik erlaubt es, daß blockierungsfrei von einem beliebigen Eingangskanal der Schaltmatrix auf einen beliebigen Ausgangskanal der Schaltmatrix umgeschaltet werden kann. Der Einsatz der Schaltmatrix in SDH-Telekommunikationsnetzen mit der DXC-Technik ist jedoch nur eine von vielen Einsatzmöglichkeiten.

Die Schaltmatrizen sind in unterschiedlichen Ausführungsformen aus dem Stand der Technik bekannt. So ist bspw. aus der EP 0 569 913 A2 und der EP 0 397 370 A2 eine Schaltmatrix (11, vgl. Fig. 3) bekannt, bei der die Schalteinheiten (12) in mehreren Schichten (16), nämlich einer Eingangsschicht, einer Mittelschicht und einer Ausgangsschicht, angeordnet sind. Eine solche Schaltmatrix (11) wird auch als Clos-Matrix bezeichnet. An den Schalteinheiten (12) der Eingangsschicht sind die Eingangskanäle (13) und an den Schalteinheiten (12) der Ausgangsschicht die Ausgangskanäle (14) angeordnet. Die Schalteinheiten (12) der verschiedenen Schichten (16) sind miteinander verknüpft, so daß von jedem Eingangskanal (13) zu jedem Ausgangskanal (14) ein Pfad über die Schalteinheiten (12) der Schaltmatrix (11) gefunden werden kann. Die bekannte Schaltmatrix (11) hat den Nachteil, daß sie nur eingeschränkte Broadcast- und Protection-Fähigkeiten aufweist. Von einer Broadcast-Verbindung spricht man, wenn von einem Eingangskanal (13) zu mehreren Ausgangskanälen (14) eine Verbindung hergestellt werden soll. der umgekehrte Fall, eine Verbindung von mehreren Eingangskanälen (13) zu einem Ausgangskanal (14) herzustellen, wird als Protection-Verbindung bezeichnet. Außerdem weist die Clos-Matrix aufgrund der Vielzahl von Verknüpfungen einen sehr unübersichtlichen Aufbau auf. Dadurch gestaltet sich die Auswahl eines Pfades von einem Eingangskanal (13) zu einem beliebigen Ausgangskanal (14) sehr aufwendig und schwierig.

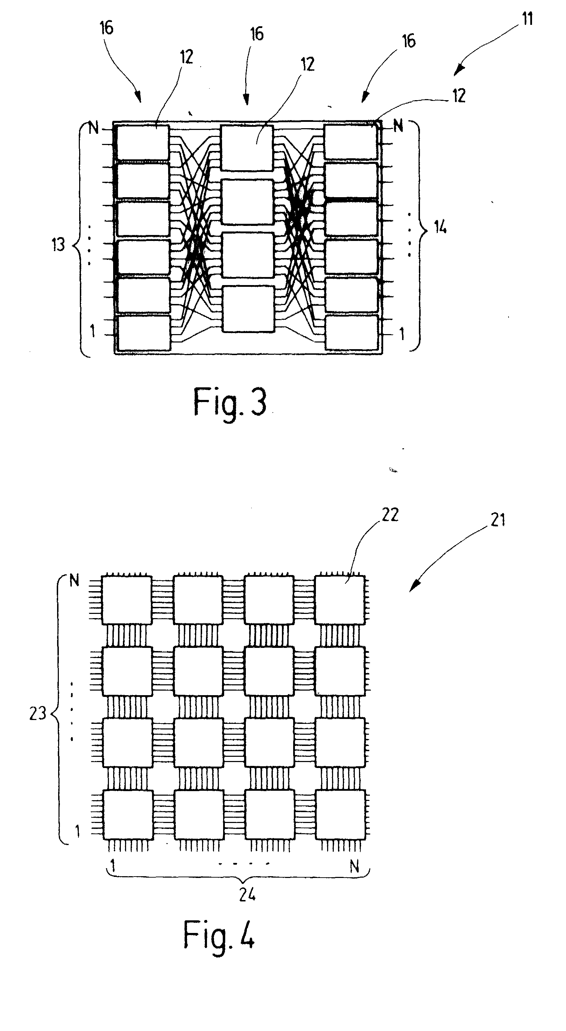

Als eine andere Ausführungsform einer Schaltmatrix sind Schaltmatrizen (21, vgl. Fig. 4) bekannt, deren Schalteinheiten (22) in Form einer quadratischen Matrix angeordnet sind. Entlang einer ersten Seite der quadratischen Matrix (21) sind die Eingangskanäle (23) ausgebildet. Die Ausgangskanäle (24) sind entlang einer zweiten Seite der Matrix (21) ausgebildet. Derartige Schaltmatrizen (21) weisen volle Broadcast- und Protection-Fähigkeiten auf. Außerdem ist bei derart ausgebildeten Schaltmatrizen (21) die Auswahl eines Pfades von einem Eingangskanal (23) zu einem beliebigen Ausgangskanal (24) wesentlich einfacher als bei den oben beschriebenen Clos-Matrizen (11). Es hat sich jedoch als nachteilig erwiesen, daß eine quadratische Schaltmatrix (21) eine sehr große Anzahl an Schalteinheiten (22) aufweist. Um die vollen Broadcast- und Protection-Fähigkeiten zu ermöglichen, weist sie erheblich mehr Schalteinheiten (22) auf, als bspw. die Clos-Matrizen (11) aus Fig. 3.

Aus den vorgenannten Nachteilen des Standes der Technik ergibt sich die Aufgabe der vorliegenden Erfindung, eine Schaltmatrix der eingangs genannten Art dahingehend auszugestalten und weiterzubilden, daß einerseits ein Pfad von einem beliebigen Eingangskanal zu einem beliebigen Ausgangskanal schnell und einfach ausgewählt werden kann und daß die Schaltmatrix volle Broadcast- und Protection-Fähigkeiten aufweist und daß die Schaltmatrix aber andererseits eine möglichst geringe Anzahl an Schalteinheiten benötigt.

Zur Lösung dieser Aufgabe schlägt die Erfindung ausgehend von der Schaltmatrix der eingangs genannten Art vor, daß die Schalteinheiten in einer Dreiecksmatrix-Struktur angeordnet sind.

Bei der Dreiecksmatrix-Struktur handelt es sich nicht um eine physische Struktur, sondern um eine rein logische Struktur. Das bedeutet, daß die einzelnen Schalteinheiten nicht tatsächlich in einer Dreiecksmatrix-Struktur angeordnet sind, sondern vielmehr beleibig angeordnet sein können und lediglich in einer Dreiecksmatrix-Struktur untereinander verschaltet sind. Bei den nachfolgenden Ausführungen wird zur Vereinfachung davon ausgegangen, daß die Schaltmatrix die Struktur einer unteren Dreiecksmatrix hat, deren Spalten von links nach rechts und deren Reihen von unten nach oben durchnummeriert sind.

Das setzt voraus, daß die Anzahl der Eingangskanäle gleich der Anzahl der Ausgangskanäle ist. Die Eingangskanäle sind entlang der einen Seite der Dreiecksmatrix und die Ausgangskanäle entlang der anderen Seite der Dreiecksmatrix angeordnet. Mit der erfindungsgemäßen Schaltmatrix kann einfach und schnell ein Pfad von einem beliebigen Eingangskanal zu einem beliebigen Ausgangskanal ausgewählt werden. Die Auswahl eines geeigneten Pfades durch die Schaltmatrix erfolgt bidirektional, d. h. die Pfade können auch von einem beliebigen Ausgangskanal zu einem beliebigen Eingangskanal ausgewählt werden.

Bei der erfindungsgemäßen Schaltmatrix ist die Anzahl der Schalteinheiten im Vergleich zu der quadratischen Schaltmatrix nahezu um die Hälfte verringert. Genauer gesagt verringert sich die Anzahl der Schalteinheiten gegenüber der quadratischen Schaltmatrix um den Faktor (n+1)/2n, wobei n die Anzahl der Schalteinheiten entlang einer Kathetenseite der Dreiecksmatrix ist. Durch die geringer Anzahl an benötigten Schalteinheiten können die Herstellungskosten einer mit der erfindungsgemäßen Schaltmatrix ausgestatteten Telekommunikationsanlage entscheidend reduziert werden. So kann bspw. bei einer 40 x 40-Schaltmatrix die Anzahl der Schalteinheiten von 1.600 bei der quadratischen Schaltmatrix (vgl. Fig. 4) auf 820 ((40+1)/80 * 1.600) bei der erfindungsgemäßen Schaltmatrix reduziert werden.

Die erfindungsgemäße Schaltmatrix weist darüber hinaus volle Broadcast- und Protection-Fähigkeiten auf. D. h. es kann ein Pfad für eine Verbindung von einem beliebigen Eingangskanal der Schaltmatrix zu mehreren beliebigen Ausgangskanälen bzw. für eine Verbindung von mehreren beliebigen Eingangskanälen der Schaltmatrix zu einem beliebigen Ausgangskanal ausgewählt werden. Dies ist ein entscheidender Vorteil bspw. gegenüber der Clos-Matrix (vgl. Fig. 3).

Bei der erfindungsgemäßen Schaltmatrix sind die Schalteinheiten in einer Dreiecksmatrix-Struktur angeordnet. Es ist aber auch denkbar, daß innerhalb einer Schalteinheit eine Dreiecksmatrix-Struktur ausgebildet ist, durch die die Eingangskanäle, die in die Schalteinheit hinein führen, und die Ausgangskanäle, die aus der Schalteinheit heraus führen, miteinander verbunden sind. Auf diese Weise kann die Anzahl der Verknüpfungen innerhalb der Schalteinheit vermindert werden. Des weiteren ist es denkbar, daß mehrere Schaltmatrizen ebenfalls in einer Dreiecksmatrix-Struktur angeordnet sind. Dadurch kann die Anzahl der Schaltmatrizen in einer Vermittlungsstation in einem Telekommunikationsnetzwerk entscheidend reduziert werden.

Die Erfindung betrifft außerdem ein Verfahren zur Auswahl eines Pfades durch eine Schaltmatrix, bei der die Schalteinheiten in einer Dreiecksmatrix-Struktur angeordnet sind, von einem Eingangskanal der Schaltmatrix zu einem Ausgangskanal der Schaltmatrix.

Die Erfindung schlägt ein Auswahlverfahren vor, bei dem der kürzeste und der am nächsten zur Matrixdiagonalen verlaufende Pfad gewählt wird.

Dieses Verfahren wird für jede Verbindung zwischen einem Eingangskanal und einem Ausgangskanal der Schaltmatrix wiederholt. Allerdings muß bei einer erneuten Durchführung des Verfahrens zur Auswahl eines weiteren Pfads von einem weiteren Eingangskanal zu einem weiteren Ausgangskanal beachtet werden, daß bestimmte Verbindungsleitungen möglicherweise bereits durch einen vorher ausgewählten Pfad einer vorherigen Verbindung zwischen einem vorherigen Eingangskanal zu einem vorherigen Ausgangskanal belegt sind. Eine Verbindungsleitung kann nicht für zwei unterschiedliche Pfade ausgewählt werden, da sich sonst ein Konflikt zwischen den unterschiedlichen Datensignalen, die über die verschiedenen Pfade übermittelt werden, ergeben könnte. Deshalb wird gemäß einer vorteilhaften Weiterbildung der vorliegenden Erfindung vorgeschlagen, daß bei einer erneuten Durchführung des Verfahrens zur Auswahl eines weiteren Pfads von einem weiteren Eingangskanal zu einem weiteren Ausgangskanal der kürzeste und der am nächsten zur Matrixdiagonalen verlaufende weitere Pfad gewählt wird, der noch nicht durch einen vorher ausgewählten Pfad von einem vorherigen Eingangskanal zu einem vorherigen Ausgangskanal belegt ist. Falls eine bestimmte Verbindungsleitung für einen weiteren Pfad ausgewählt wurde, diese Verbindungsleitung aber bereits von einem vorher ausgewählten Pfad belegt ist, wird der Pfad an der Schalteinheit vor dieser Verbindungsleitung ausnahmsweise nach unten zu der nächsten Schalteinheit verzweigt. Von dort aus wird dann wieder versucht, den am nächsten zu der Matrixdiagnonalen verlaufenden weiteren Pfad auszuwählen.

Gemäß einer bevorzugten Ausführungsform ist das erfindungsgemäße Verfahren gekennzeichnet durch die nachfolgenden Schritte:
- ein Eingangskanal wird ausgewählt, von dem aus der Pfad beginnt,
- ein Ausgangskanal wird ausgewählt, an dem der Pfad endet,
- der Pfad wird von dem Eingangskanal ausgehend entlang einer Reihe der Schaltmatrix in Richtung auf die Matrixdiagonale verlaufend gewählt, bis entweder eine Spalte der Schaltmatrix erreicht ist, in der der Ausgangskanal liegt, oder die Matrixdiagonale erreicht ist,
- falls die Spalte erreicht ist, wird der Pfad entlang der Spalte von der Matrixdiagonalen weg verlaufend gewählt, bis die erste Reihe erreicht ist, und
- falls die Matrixdiagonale erreicht ist, wird der Pfad entlang der Matrixdiagonalen in Richtung auf die Spalte, in der der Ausgangskanal liegt, verlaufend gewählt, bis diese Spalte erreicht ist, von wo aus der Pfad dann entlang der Spalte von der Matrixdiagonalen weg verlaufend gewählt wird, bis die erste Reihe erreicht ist.

Bei einer erneuten Durchführung des Verfahrens zur Auswahl eines weiteren Pfads ist das Verfahren zur Beachtung möglicherweise bereits durch einen vorher ausgewählten Pfad belegter Verbindungsleitungen gemäß einer weiteren bevorzugten Ausführungsform dadurch gekennzeichnet, daß
- ein weiterer Eingangskanal ausgewählt wird, von dem aus der weitere Pfad beginnt,
- ein weiterer Ausgangskanal ausgewählt wird, an dem der weitere Pfad endet,
- der weitere Pfad von dem weiteren Eingangskanal ausgehend entlang einer weiteren Reihe der Schaltmatrix in Richtung auf die Matrixdiagonale verlaufend gewählt wird, bis entweder eine weitere Spalte der Schaltmatrix erreicht ist, in der der weitere Ausgangskanal liegt, oder die Matrixdiagonale erreicht ist, oder eine Schalteinheit erreicht ist, deren Verbindungsleitung in Richtung auf die Matrixdiagonale bereits durch einen vorher ausgewählten Pfad belegt ist,
- falls die weitere Spalte erreicht ist, wird der weitere Pfad entlang der weiteren Spalte von der Matrixdiagonalen weg verlaufend gewählt, bis die erste Reihe erreicht ist,
- falls die Matrixdiagonale erreicht ist, wird der weitere Pfad entlang der Matrixdiagonalen in Richtung auf die weitere Spalte, in der der weitere Ausgangskanal liegt, verlaufend gewählt, bis diese weitere Spalte erreicht ist, von wo aus der weitere Pfad dann entlang der weiteren Spalte von der Matrixdiagonalen weg verlaufend gewählt wird, bis die erste Reihe erreicht ist,
- falls die Schalteinheit erreicht ist, deren Verbindungsleitung in Richtung auf die Matrixdiagonale bereits durch einen vorher ausgewählten Pfad belegt ist, wird der weitere Pfad entlang der Spalte, in der diese Schalteinheit liegt, von der Matrixdiagonalen weg verlaufend gewählt, bis eine Schalteinheit erreicht ist, deren Verbindungsleitung in Richtung auf die Matrixdiagonale nicht durch einen vorher ausgewählten Pfad belegt ist, von wo aus der weitere Pfad dann entlang der weiteren Reihe, in der diese Schalteinheit liegt, in Richtung auf die Matrixdiagonale gewählt wird, bis entweder die weitere Spalte der Schaltmatrix erreicht ist, in der der weitere Ausgangskanal liegt, oder die Matrixdiagonale erreicht ist,
- falls die weitere Spalte erreicht ist, wird der weitere Pfad entlang der weiteren Spalte von der Matrixdiagonalen weg verlaufend gewählt, bis die erste Reihe erreicht ist, und
- falls die Matrixdiagonale erreicht ist, wird der weitere Pfad entlang der Matrixdiagonalen in Richtung auf die weitere Spalte, in der der weitere Ausgangskanal liegt, verlaufend gewählt, bis diese weitere Spalte erreicht ist, von wo aus der weitere Pfad dann entlang der weiteren Spalte von der Matrixdiagonalen weg verlaufend gewählt wird, bis die erste Reihe erreicht ist.

Gemäß einer vorteilhaften Weiterbildung der Erfindung wird vorgeschlagen, daß, falls ein Eingangskanal mit mehreren Ausgangskanälen Qₖ verbunden werden soll (Broadcast-Verbindung), das Verfahren für jeden Ausgangskanal Qₖ erneut durchgeführt wird, wobei k=1...n und n die Anzahl der Ausgangskanäle Qₖ der Schaltmatrix ist. Bei der Broadcast-Verbindung kann eine Verbindungsleitung für mehrere Verbindungen von dem Eingangskanal zu den Ausgangskanälen gleichzeitig verwendet werden, da ja dasselbe Datensignal von dem Eingangskanal auf die Ausgangskanäle geleitet wird.

Ebenso wird vorgeschlagen, daß, falls mehrere Eingangskanäle Pₖ mit einem Ausgangskanal verbunden werden soll (Protection-Verbindung), das Verfahren für jeden Eingangskanal Pₖ erneut durchgeführt wird, wobei k=1...n und n die Anzahl der Eingangskanäle Pₖ der Schaltmatrix ist. Ebenso wie bei der Broadcast-Verbindung kann auch bei der Protection-Verbindung eine Verbindungsleitung für mehrere Verbindungen von den Eingangskanälen zu dem Ausgangskanal gleichzeitig verwendet werden, da ja dasselbe Datensignal von den Eingangskanälen auf den Ausgangskanal geleitet wird.

Um die volle Funktonsfähigkeit der erfindungsgemäßen Schaltmatrix auch dann sicherzustellen, wenn Broadcast- und/oder Protection-Verbindungen in der Schaltmatrix aufgebaut sind, wird gemäß einer anderen vorteilhaften Weiterbildung der Erfindung vorgeschlagen, daß, falls für eine Verbindung von einem Eingangskanal mit einem Ausgangskanal kein Pfad durch die Schaltmatrix über ausgewählte Verbindungsleitungen und ausgewählte Schalteinheiten ausgewählt werden kann, weil bereits ein Pfad einer Broadcast-Verbindung und/oder einer Protection-Verbindung durch die Schaltmatrix ausgewählt worden ist, zunächst alle Pfade ausgewählt werden, bei denen ein Eingangskanal mit einem Ausgangskanal verbunden werden soll, und erst dann der Pfad der Broadcast-Verbindung und/oder der Protection-Verbindung ausgewählt wird.

Der Fall, daß für eine Verbindung von einem Eingangskanal mit einem Ausgangskanal kein Pfad durch die Schaltmatrix über ausgewählte Verbindungsleitungen und ausgewählte Schalteinheiten ausgewählt werden kann, weil bereits ein Pfad einer Broadcast-Verbindung und/oder einer Protection-Verbindung durch die Schaltmatrix ausgewählt worden ist, kann dann auftreten, wenn links von dem am weitesten links in der Dreiecksmatrix angeordneten Ausgangskanal, zu dem ein Pfad einer Broadcast- oder Protection-Verbindung führt, weniger Ausgangskanäle vorhanden sind, als Eingangskanäle oberhalb des am weitesten oben in der Dreiecksmatrix angeordneten Eingangskanals, zu dem ein Pfad einer Broadcast- oder Protection-Verbindung führt, vorhanden sind. Wenn dann von allen oberhalb des am weitesten oben in der Dreiecksmatrix angeordneten Eingangskanals, zu dem ein Pfad einer Broadcast- oder Protection-Verbindung führt, eine Verbindung zu einem der Ausgangskanäle hergestellt werden soll, kann es vorkommen, daß kein Pfad durch die Schaltmatrix über ausgewählte Verbindungsleitungen und ausgewählte Schalteinheiten ausgewählt werden kann, weil bereits ein Pfad der Broadcast-Verbindung und/oder der Protection-Verbindung durch die Schaltmatrix ausgewählt worden ist, der die ausgewählten Verbindungsleitungen blockiert.

Wenn dieser Fall auftritt, müssen die Pfade in der Schaltmatrix neu ausgewählt werden. Dazu schlägt die Weiterbildung vor, daß zunächst alle Pfade ausgewählt werden, bei denen ein Eingangskanal mit einem Ausgangskanal verbunden werden soll, und erst dann der Pfad der Broadcast-Verbindung und/oder der Protection-Verbindung ausgewählt wird. Bei den Verbindungen zwischen einem Eingangskanal und einem Ausgangskanal muß nämlich, wie oben bereits erläutert, darauf geachtet werden, daß eine Verbindungsleitung nicht für mehrere Verbindungen, d. h. für verschiedene Pfade, gleichzeitig verwendet wird. Für solche Verbindungen ist es somit schwieriger, einen Pfad durch die Schaltmatrix auszuwählen. Dagegen kann eine Verbindungsleitung für mehrere Verbindungen innerhalb einer Broadcast- oder einer Protection-Verbindung verwendet werden, da über alle Pfade einer Broadcast-Verbindung bzw. einer Protection-Verbindung dasselbe Datensignal übermittelt wird und es somit nicht zu einem Konflikt der auf den Pfaden einer Broadcast-Verbindung bzw. einer Protection-Verbindung übermittelten Datensignale kommen kann. Für solche Verbindungen ist es also einfacher, einen Pfad durch die Schaltmatrix auszuwählen.

Nachdem die Pfade für die Verbindungen zwischen einem Eingangskanal und einem Ausgangskanal ausgewählt wurden, werden die Pfade für die Broadcast-Verbindungen und/oder die Protection-Verbindungen nach dem oben erläuterten Verfahren ausgewählt. Es wird der am nächsten zu der Matrixdiagonalen verlaufende Pfad ausgewählt, es sei denn, eine ausgewählte Verbindungsleitung ist bereits von einem vorher ausgewählten Pfad belegt. Dann wird der Pfad von der Schalteinheit vor der belegten Verbindungsleitung aus über eine nach unten führende Verbindungsleitung zu der unterhalb der Schalteinheit angeordnete Schalteinheit ausgewählt. Von dieser Schalteinheit aus wird dann versucht, wieder den am nächsten zu der Matrixdiagonalen verlaufenden Pfad auszuwählen.

Zwei bevorzugte Ausführungsbeispiele der vorliegenden Erfindung werden im Folgenden anhand der Zeichnungen näher erläutert. Es zeigen:
- Figur 1: eine erfindungsgemäße Schaltmatrix für Telekommunikationsanwendungen gemäß einer ersten Ausführungsform;
- Figur 2: eine erfindungsgemäße Schaltmatrix gemäß einer zweiten Ausführungsform;
- Figur 3: eine aus dem Stand der Technik bekannte Schaltmatrix; und
- Figur 4: eine weitere aus dem Stand der Technik bekannte Schaltmatrix.

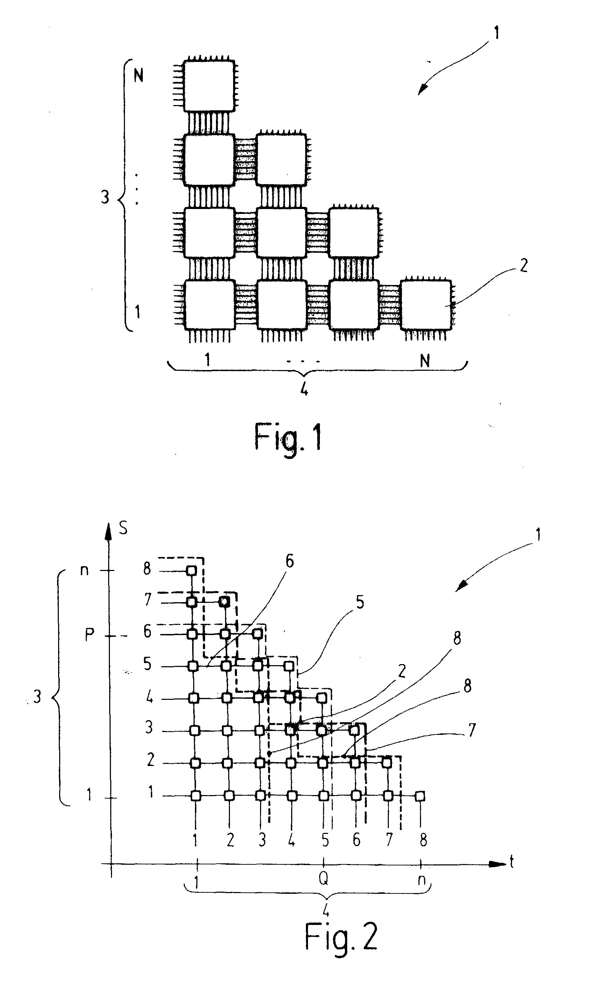

In Figur 1 ist eine erfindungsgemäße Schaltmatrix für Anwendungen in der Telekommunikation in ihrer Gesamtheit mit dem Bezugszeichen 1 gekennzeichnet. Die Schaltmatrix 1 weist zehn Schalteinheiten 2 auf, die in einer unteren Dreiecksmatrix-Struktur angeordnet sind. An der linken Seite der Dreiecksmatrix sind Eingangskanäle 3 und an der unteren Seite der Dreiecksmatrix Ausgangskanäle 4 ausgebildet.

Bei der Dreiecksmatrix-Struktur der Schaltmatrix 1 handelt es sich nicht um eine physische Struktur, sondern um eine rein logische Struktur. Das bedeutet, daß die einzelnen Schalteinheiten 2 nicht tatsächlich in einer Dreiecksmatrix-Struktur angeordnet sind, sondern vielmehr beleibig angeordnet sein können und lediglich in einer Dreiecksmatrix-Struktur untereinander verschaltet sind. Bei den nachfolgenden Ausführungen wird zur Vereinfachung davon ausgegangen, daß die Schaltmatrix 1 die Struktur einer unteren Dreiecksmatrix hat, deren Spalten von links nach rechts (von 1 bis N, N = 4) und deren Reihen von unten nach oben (von 1 bis N, N = 4) durchnummeriert sind.

In Figur 2 ist die Struktur einer Schaltmatrix 1 gemäß einer zweiten Ausführungsform dargestellt. Die Eingangskanäle 3 der Schaltmatrix 1 sind mit den Ausgangskanälen 4 ebenfalls über Schalteinheiten 2 verbunden, die in einer Dreiecksmatrix-Struktur angeordnet sind. Bei den nachfolgenden Ausführungen wird davon ausgegangen, daß die Schaltmatrix 1 die Struktur einer unteren Dreiecksmatrix hat, deren Spalten t von links nach rechts (von 1 bis n, n = 8) und deren Reihen s von unten nach oben (von 1 bis n, n = 8) durchnummeriert sind. Die Eingangskanäle 3 und die Ausgangskanäle 4 der Schaltmatrix 1 aus Figur 2 sind nur symbolisch dargestellt. In Wirklichkeit steht jeder der Eingangskanäle 3 bzw. jeder der Ausgangskanäle 4 für mehrere Eingangskanäle 3 bzw. für mehrere Ausgangskanäle 4.

Wenn nun bei der Schaltmatrix 1 aus Figur 2, die n = 8 Schalteinheiten 2 je Kathetenseite aufweist, ein Pfad 5 von einem Eingangskanal P = 6 zu einem Ausgangskanal Q = 5 ausgewählt werden soll, wird der Pfad 5 zunächst von dem Eingangskanal P ausgehend entlang der Reihe s = P nach rechts verlaufend gewählt, bis die Matrixdiagonale erreicht ist. Dann wird der Pfad 5 entlang der Matrixdiagonalen nach unten verlaufend gewählt, bis die Spalte t = Q erreicht ist, in der der gewünschte Ausgangskanal Q liegt. Von dort aus wird der Pfad 5 dann entlang der Spalte t = Q nach unten verlaufend gewählt bis der Ausgangskanale Q in der ersten Reihe s = 1 erreicht ist. Auf diese Weise wird der kürzeste und der am nächsten zu der Matrixdiagonalen verlaufende Pfad 5 gewählt.

Das erfindungsgemäße Verfahren zur Auswahl eines Pfades 5 durch die Schaltmatrix 1 von dem Eingangskanal P zu dem Ausgangskanal Q kann auch als Algorithmus formuliert werden. Dabei ist n die Anzahl der Schalteinheiten 2 je Kathetenseite der Dreiecksmatrix. Jede Schalteinheit 2 ist durch die Reihe s und die Spalte t, d.h. durch einen Punkt (t, s), innerhalb der Struktur der Schaltmatrix 1 definiert.

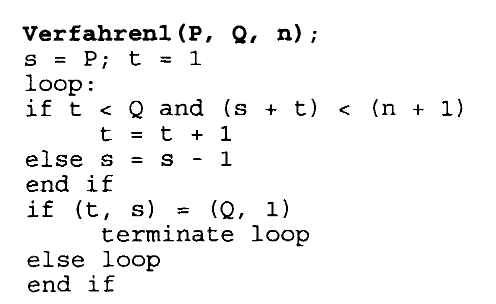

Wenn nun ein weiterer Pfad 7 für eine weitere Verbindung zwischen einem weiteren Eingangskanal 3 zu einem weiteren Ausgangskanal 4 ausgewählt werden soll, wird dieses Verfahren zur Auswahl eines jeden weiteren Pfades 7 durchlaufen, d. h. es wird auch für die weiteren Pfade 7 versucht, den am nächsten zu der Matrixdiagonalen verlaufenden Pfad 7 auszuwählen. Allerdings muß bei der Auswahl der weiteren Pfade 7 darauf geachtet werden, daß der weitere Pfad 7 nicht über Verbindungsleitungen 6 verläuft, die bereits von vorher ausgewählten Pfaden 5 belegt sind. So verläuft bspw. ein weiterer Pfad 7 von dem Eingangskanal P = 7 zu dem Ausgangskanal Q = 6 nicht entlang der Matrixdiagonalen (die Verbindungsleitungen 6 auf der Matrixdiagonalen sind bereits von dem Pfad 5 von dem Eingangskanal P = 6 zu dem Ausgangskanal Q = 5 belegt), sondern er verläuft um eine Schalteinheit 2 von der Matrixdiagonalen entfernt.

Soll zwischen einem Eingangskanal P und mehreren Ausgangskanälen Qₖ (Broadcast-Verbindung) ein Pfad ausgewählt werden, so wird das erfindungsgemäße Verfahren für jeden der Ausgangskanäle Qₖ durchgeführt. Ebenso wird das Verfahren, wenn zwischen mehreren Eingangskanälen Pₖ und einem Ausgangskanal Q (Protection-Verbindung) ein Pfad ausgewählt werden soll, für jeden der Eingangskanäle Pₖ durchgeführt. Dabei ist k ein Zähler für eine Liste der Ausgangskanäle Qₖ bzw. der Eingangskanäle Pₖ. Bei der Auswahl der Pfade 8 für eine Broadcast-Verbindung kann eine Verbindungsleitung 6 auf von mehreren Pfaden 8 verwendet werden, da über alle Pfade 8 dasselbe Datensignal übertragen wird, so daß es nicht zu Konflikten zwischen den auf den Pfaden 8 übertragenen Datensignalen kommen kann. Das gleiche gilt auch für die Protection-Verbindungen. Allerdings muß bei der Auswahl der weiteren Pfade 8 für Broadcast-Verbindung bzw. für Protection-Verbindungen darauf geachtet werden, daß der weitere Pfad 8 nicht über Verbindungsleitungen 6 verläuft, die bereits von vorher ausgewählten Pfaden 5 zwischen einem Eingangskanal 3 und einem Ausgangskanal 4 belegt sind. Der vorher ausgewählte Pfad 5 kann ein Pfad einer Broadcast- bzw. einer Protection-Verbindung oder aber ein Pfad zwischen einem Eingangskanal 3 und einem Ausgangskanal 4 sein. In Figur 2 sind die Pfade 8 einer Broadcast-Verbindung von dem Eingangskanal P = 8 zu den Ausgangskanälen Qₖ = {3, 7} beispielhaft dargestellt.

Wenn nun ein Pfad 8 von einem Eingangskanal P₁ zu Ausgangskanälen Qₖ, mit k = 1, ..., K, ausgewählt werden soll, lautet der entsprechende Algorithmus dann:

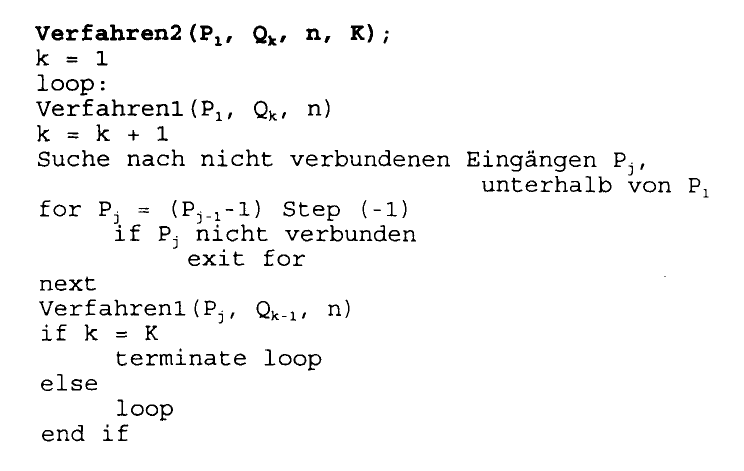

## Patentansprüche

1. Schaltmatrix (1) für Anwendungen in der Telekommunikation, mit mehreren nebeneinander angeordneten Schalteinheiten (2), mit Verbindungsleitungen (6), durch die benachbarte Schalteinheiten (2) miteinander verbunden sind, mit mehreren Eingangskanälen (3) und mit ebenso vielen Ausgangskanälen (4), wobei jeder Eingangskanal (3) durch Auswahl eines Pfades durch die Schaltmatrix (1) über ausgewählte Verbindungsleitungen (6) und ausgewählte Schalteinheiten (2) mit jedem Ausgangskanal (4) verbindbar ist, **dadurch gekennzeichnet,** daß die Schalteinheiten (2) in einer Dreiecksmatrix-Struktur angeordnet sind.

2. Verfahren zur Auswahl eines Pfades durch eine Schaltmatrix (1) nach Anspruch 1 von einem Eingangskanal (P) der Schaltmatrix (1) zu einem Ausgangskanal (Q) der Schaltmatrix (1), **dadurch gekennzeichnet,** daß der kürzeste und der am nächsten zur Matrixdiagonalen verlaufende Pfad (5) gewählt wird.

3. Verfahren nach Anspruch 2, dadurch gekennzeichnet, daß bei einer erneuten Durchführung des Verfahrens zur Auswahl eines weiteren Pfads (5) von einem weiteren Eingangskanal (P) zu einem weiteren Ausgangskanal (Q) der kürzeste und der am nächsten zur Matrixdiagonalen verlaufende weitere Pfad (5) gewählt wird, der noch nicht durch einen vorher ausgewählten Pfad (5) von einem vorherigen Eingangskanal P (3) zu einem vorherigen Ausgangskanal Q (4) belegt ist.

4. Verfahren nach Anspruch 2, gekennzeichnet durch die nachfolgenden Schritte:
- ein Eingangskanal P (3) wird ausgewählt, von dem aus der Pfad (5) beginnt,
- ein Ausgangskanal Q (4) wird ausgewählt, an dem der Pfad (5) endet,
- der Pfad (5) wird von dem Eingangskanal P (3) ausgehend entlang einer Reihe P (s) der Schaltmatrix (1) in Richtung auf die Matrixdiagonale verlaufend gewählt, bis entweder eine Spalte Q (t) der Schaltmatrix (1) erreicht ist, in der der Ausgangskanal Q (4) liegt, oder die Matrixdiagonale erreicht ist,
- falls die Spalte Q (t) erreicht ist, wird der Pfad (5) entlang der Spalte Q (t) von der Matrixdiagonalen weg verlaufend gewählt, bis die erste Reihe (s) erreicht ist,
- falls die Matrixdiagonale erreicht ist, wird der Pfad (5) entlang der Matrixdiagonalen in Richtung auf die Spalte Q (t), in der der Ausgangskanal Q (4) liegt, verlaufend gewählt, bis diese Spalte Q (t) erreicht ist, von wo aus der Pfad (5) dann entlang der Spalte Q (t) von der Matrixdiagonalen weg verlaufend gewählt wird, bis die erste Reihe (s) erreicht ist.

5. Verfahren nach Anspruch 3 und 4, dadurch gekennzeichnet, daß
- ein weiterer Eingangskanal P (3) ausgewählt wird, von dem aus der weitere Pfad (5) beginnt,
- ein weiterer Ausgangskanal Q (4) ausgewählt wird, an dem der weitere Pfad (5) endet,
- der weitere Pfad (5) von dem weiteren Eingangskanal P (3) ausgehend entlang einer weiteren Reihe P (s) der Schaltmatrix (1) in Richtung auf die Matrixdiagonale verlaufend gewählt wird, bis entweder eine weitere Spalte Q (t) der Schaltmatrix (1) erreicht ist, in der der weitere Ausgangskanal Q (4) liegt, oder die Matrixdiagonale erreicht ist, oder eine Schalteinheit (2) erreicht ist, deren Verbindungsleitung (6) in Richtung auf die Matrixdiagonale bereits durch einen vorher ausgewählten Pfad (5) belegt ist,
- falls die weitere Spalte Q (t) erreicht ist, wird der weitere Pfad (5) entlang der weiteren Spalte Q (t) von der Matrixdiagonalen weg verlaufend gewählt, bis die erste Reihe (s) erreicht ist, - falls die Matrixdiagonale erreicht ist, wird der weitere Pfad (5) entlang der Matrixdiagonalen in Richtung auf die weitere Spalte Q (t), in der der weitere Ausgangskanal Q (4) liegt, verlaufend gewählt, bis diese weitere Spalte Q (t) erreicht ist, von wo aus der weitere Pfad (5) dann entlang der weiteren Spalte Q (t) von der Matrixdiagonalen weg verlaufend gewählt wird, bis die erste Reihe (s) erreicht ist,
- falls die Schalteinheit (2) erreicht ist, deren Verbindungsleitung (6) in Richtung auf die Matrixdiagonale bereits durch einen vorher ausgewählten Pfad (5) belegt ist, wird der weitere Pfad (5) entlang der Spalte Q (t), in der diese Schalteinheit (2) liegt, von der Matrixdiagonalen weg verlaufend gewählt, bis eine Schalteinheit (2) erreicht ist, deren Verbindungsleitung (6) in Richtung auf die Matrixdiagonale nicht durch einen vorher ausgewählten Pfad (5) belegt ist, von wo aus der weitere Pfad (5) dann entlang der weiteren Reihe P (s), in der diese Schalteinheit (2) liegt, in Richtung auf die Matrixdiagonale gewählt wird, bis entweder die weitere Spalte Q (t) der Schaltmatrix (1) erreicht ist, in der der weitere Ausgangskanal Q (4) liegt, oder die Matrixdiagonale erreicht ist,
- falls die weitere Spalte Q (t) erreicht ist, wird der weitere Pfad (5) entlang der weiteren Spalte Q (t) von der Matrixdiagonalen weg verlaufend gewählt, bis die erste Reihe (s) erreicht ist,
- falls die Matrixdiagonale erreicht ist, wird der weitere Pfad (5) entlang der Matrixdiagonalen in Richtung auf die weitere Spalte Q (t), in der der weitere Ausgangskanal Q (4) liegt, verlaufend gewählt, bis diese weitere Spalte Q (t) erreicht ist, von wo aus der weitere Pfad (5) dann entlang der weiteren Spalte Q (t) von der Matrixdiagonalen weg verlaufend gewählt wird, bis die erste Reihe (s) erreicht ist.

6. Verfahren nach einem der Ansprüche 2 bis 5, dadurch gekennzeichnet, daß, falls ein Eingangskanal P (3) mit mehreren Ausgangskanälen Qₖ (4) verbunden werden soll (Broadcast-Verbindung), das Verfahren für jeden Ausgangskanal Qₖ (4) erneut durchgeführt wird, wobei k=1...n und n die Anzahl der Ausgangskanäle (4) der Schaltmatrix (1) ist.

7. Verfahren nach einem der Ansprüche 2 bis 6, dadurch gekennzeichnet, daß, falls mehrere Eingangskanäle Pₖ (3) mit einem Ausgangskanal Q (4) verbunden werden soll (Protection-Verbindung), das Verfahren für jeden Eingangskanal Pₖ (3) erneut durchgeführt wird, wobei k=1...n und n die Anzahl der Eingangskanäle (3) der Schaltmatrix (1) ist.

8. Verfahren nach Anspruch 6 oder 7, dadurch gekennzeichnet, daß, falls für eine Verbindung von einem Eingangskanal P (3) mit einem Ausgangskanal Q (4) kein Pfad (5) durch die Schaltmatrix (1) über ausgewählte Verbindungsleitungen (6) und ausgewählte Schalteinheiten (2) ausgewählt werden kann, weil bereits ein Pfad (5) einer Broadcast-Verbindung und/oder einer Protection-Verbindung durch die Schaltmatrix (1) ausgewählt worden ist, zunächst alle Pfade (5) ausgewählt werden, bei denen ein Eingangskanal P (3) mit einem Ausgangskanal Q (4) verbunden werden soll, und erst dann der Pfad (5) der Broadcast-Verbindung und/oder der Protection-Verbindung ausgewählt wird.
